Europäisches Patentamt

European Patent Office

Office européen des brevets

(11) Publication number: **0 141 672**
A1

## EUROPEAN PATENT APPLICATION

(21) Application number: 84307655.5

(22) Date of filing: 06.11.84

(51) Int. Cl.⁴: **B 64 F 1/06**

(30) Priority: 07.11.83 GB 8329703

(43) Date of publication of application: 15.05.85
Bulletin 85/20

(84) Designated Contracting States: **BE CH DE FR IT LI NL SE**

(71) Applicant: **GQ DEFENCE EQUIPMENT LIMITED, Catteshall Lane, Godalming Surrey, GU7 1LH (GB)**

(72) Inventor: **Allen, Roger Frederick, 51 South Hill, Godalming Surrey (GB)**
Inventor: **Campbell, Colin Ian, 17 Tansy Close Merrow Park, Guildford Surrey (GB)**

(74) Representative: **Moon, Donald Keith et al, BREWER & SON 5-9 Quality Court Chancery Lane, London WC2A 1HT (GB)**

(54) Load deployment device.

(57) A load deployment device for deploying an aerial load comprises a carriage (17) constrained to move along a track (18) and load engagement arms (25, 26) carried by the carriage (17) and movable at a deployment location on the track (18) in a direction transverse to the direction of movement of the carriage (17) from engaged positions in which they engage and support the load to retracted positions in which they are clear of the load (14).

ACTORUM AG

0141672

- 1 -

## LOAD DEPLOYMENT DEVICE.

The present invention relates to a load deployment device and is particularly although not exclusively concerned with a device for launching aircraft test models from a ground station.

An aircraft test model launching device has been proposed in which the model is supported by support arms upstanding from a carriage which is driven along a track from a start position at one end of the track to a deployment position at the other end of the track. At the deployment position the carriage is brought to rest and the aircraft model released from the support arms and propelled forwardly into the air under its own momentum. In the proposed arrangement, the upstanding support arms are pivotally mounted at their lowermost ends on the carriage for pivotal movement about axes at right-angles to the direction of travel of the carriage and are arranged to pivot forwardly on the carriage under their own momentum when the carriage is brought to rest. The arms are arranged to engage laterally extending bosses protruding from the model and are so constructed that they close round the boss during traverse of the carriage along the track and move to an open configuration at the end of the track to enable the model to free itself from the support arms.

It will be appreciated that in the hitherto proposed launching device the upper ends of the support arms at the instant when the model is released from them are travelling at the same speed as the model and although the upper ends are rapidly moved through an arc and finally brought to rest with the carriage there is the disadvantage that the time it takes for the upper ends of the arms to move clear of the released model can be such as to cause fouling of the arms with trailing control surfaces protruding from the model. In addition, there is the disadvantage that the construction of the arms to provide for the model to be held securely during movement of the carriage along the track whilst providing for release of the model at the end of the track is complex.

It is an object of the present invention to provide an aircraft test model launching device which does not suffer from the above-mentioned disadvantages.

According to the present invention there is provided a load deployment device for deploying an aerial load comprising load support means for supporting the load and for deploying the load by causing relative displacement between the support means and the load in a predetermined direction whilst releasing the load from the support means, the support means being movable at deployment of the load from an engaged position in which it engages and supports the load to a retracted position in which it is clear of the load, characterised in that the support means is at deployment of the load movable from the engaged position to the retracted position in a direction transverse to the predetermined direction.

In preferred embodiments of the invention the device includes a track along which the load support means is guided and drive means for driving the load support means from a start location at one end of the track to a deployment location at the other end of the track, at which the load is deployed. The load support means then preferably comprises a carriage constrained to move along the track and load engagement means carried by the carriage and movable at the deployment location on the track in a direction transverse to the direction of movement of the carriage from an engaged position in which it engages and supports the load to a retracted position in which it is clear of the load.

In one embodiment of the invention the device comprises holding means for holding the load engagement means in its engaged position during movement of the carriage from the start location to the deployment location and for releasing the load engagement means at the deployment location and displacement means are provided so to engage the load engagement means as to move it from the engaged position to the retracted position at the deployment location on the track. The displacement means may then be an inclined surface formed on the aerial load for engagement by the load engagement means and means provided for arresting the carriage at the deployment location on the track so that the load engagement means is moved from its engaged position to its retracted position by riding up the inclined surface when the aerial load advances relative to the arrested carriage at the deployment location.

The load engagement means may be freely movable on the carriage from the engaged position to the retracted position, whereby it moves to its retracted position clear of the load solely by the thrust imparted to it

0141672

- 4 -

by the inclined surface of the load. The holding means may then comprise a guide rail extending along the track from the start location to the deployment location.

The load engagement means may comprise a support plate on each side of the carriage for engagement with each side of the load and a support member carried by the plate for engagement in a recess formed in the load. The inclined surface may then be provided by the rear wall of the recess at each side of the load. The support member may be in the form of a front pin on the plate engaging with a front recess in the side of the load and each plate may be provided with a back pin spaced from the front pin and engageable in a rear recess in the side of the load. Furthermore, the rear pin of each plate preferably so engages the cooperating rear recess in the load as to provide only for vertical location of the load on the carriage.

In an alternative embodiment of the invention, the load engagement means is biased into the engaged position and the device further comprises displacement means at the deployment location on the track so to engage the load engagement means as to move it from the engaged position to the retracted position against the bias applied to it. The displacement means then preferably comprises one or more deflector members carrying profiles so disposed in and inclined to the path traversed by the load engagement means during movement of the carriage to the deployment location as to engage the load engagement means and cause it to follow the profile and thereby to be moved from the engaged position to the retracted position.

In the alternative embodiment of the invention, the load engagement means comprises a plurality of support arms. One end of each support arm is pivotally mounted on the carriage for pivotal movement about a pivotal axis parallel to the direction of travel of the carriage on the track and the other end supportingly engages the load. Each arm is pivotal from the engaged position to the retracted position under the action of the deflector member or members. Preferably, each support arm is biased into the engaged position by biasing means and is movable from the engaged position to the retracted position against the biasing action of the biasing means.

In the alternative embodiment of the invention, the load is preferably supported by two forward and two rearward support arms upstanding from the carriage and engaging opposite sides of the load and the deflector member or members are provided with edge profiles for engagement by the arms. Each of the profiles may follow a straight line or alternatively may be curved to provide for gradually increasing rates of deflection of the arms from the engaged positions to the retracted positions.

In the alternative embodiment of the invention, each support arm may be provided with a recess or opening at the end thereof which engages the load and the load may carry a support boss which engages in the recess when the arm is moved to the engaged position, the load being supported by the arm by engagement of the boss in the recess or opening. The boss is preferably formed in a recessed portion of the load so as not to project from the load and the arm in moving from the retracted position to the engaged position passes into the recessed portion of the load for engagement with the boss. The boss may be of frusto-conical form and the recess or opening in the arm conforms to it.

Two embodiments of the invention will now be described by way of example with reference to the accompanying drawings in which:-

Fig. 1 is a schematic side elevation of an aircraft test model launching device according to a first embodiment of the invention, with some parts removed for clarity;

Fig. 2 is a schematic front elevation of part of the launching device shown in Fig. 1;

Fig. 3 is a schematic plan view of the launching device shown in Fig. 1, with some parts removed for clarity;

Fig. 4 is a schematic side elevation of an aircraft test model launching device according to a second embodiment of the invention;

Fig. 5 is a schematic front elevation of the launching device shown in Fig. 4 with the support arms supportingly engaging the model;

Fig. 6 is a schematic scrap cross-section of the front elevation shown in Fig. 5 in the region of the upper end of one of the support arms;

Fig. 7 is a schematic front elevation corresponding to that shown in Fig 5 and showing the support arms in retracted positions clear of the deployed model; and

Fig. 8 is a schematic scrap plan view of the launching device as shown in Fig. 5 with the arms deflected into their retracted positions.

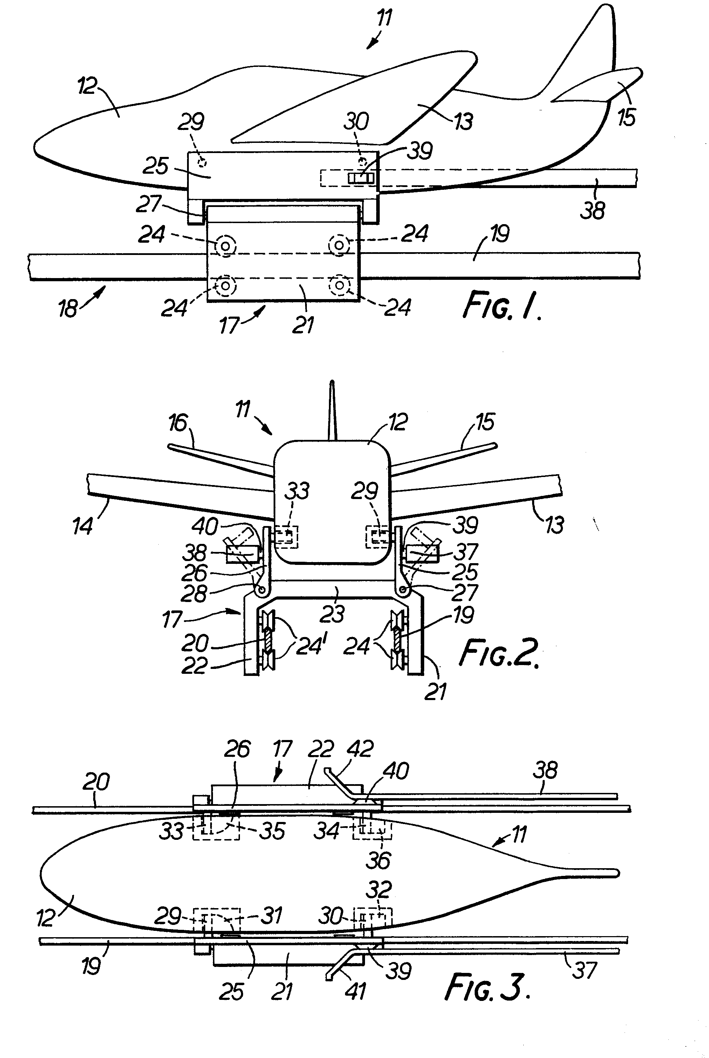

Referring first to Figs. 1 to 3 of the drawings, an aircraft test model 11 having a fuselage 12, port and starboard wings 13 and 14 and tail planes 15 and 16 is supported on a carriage 17 guided along a track 18 formed by rails 19 and 20. As will be seen, the carriage 17 comprises a U-shaped frame having depending side portions 21 and 22 joined by a bridge portion 23. The side portion 21 carries front and rear pairs of pulleys 24 and 25 which engage the rail 19 and the side portion 22 carries front and rear pairs of pulleys which engage the rail 20, the front pulleys only being shown in Fig. 2 and being indicated by the reference 24'.

The carriage 17 carries two support plates 25 and 26 pivotally mounted on the forward and rearward ends of pins 27 and 28 carried by the bridge portion 23 of the carriage 17. The pins 27 and 28 are so disposed that the pivotal axes of the two plates 25 and 26 are parallel to the rails 19 and 20 and parallel to the direction of movement of the carriage 17 on the track.

The support plate 25 carries at its upper end support pins 29 and 30 which are arranged to engage in recesses 31 and 32 formed in the port side of the aircraft model 11. Similarly the upper end of the support plate 26 is provided with front and rear support pins 33 and 34 which are arranged to engage in recesses 35 and 36 on the starboard side of the model 11.

The support plates 25 and 26 are held in their engaged positions as shown in full line in Figs. 1 to 3 by guide rails 37 and 38 which are arranged to extend along the track 18 from a start location (not shown) at one end of the track up to a deployment location at the other end of the track, as shown in Figs. 1 to 3. As will be seen the plate 25 is formed with a guide stud 39 which is arranged to bear against the guide rail 37 as best seen in Figs. 2 and 3. Similarly, the support plate 26 is provided with a guide stud 40 which is arranged to bear against the guide rail 39. The two guide rails 37 and 38 terminate at the deployment location of the track by out-turned ends 41 and 42. The front recesses 31 and 35 are formed by flat horizontal top and bottom walls, a flat vertical front wall and a curved rear wall. The rear recesses 32 and 36 in the model 11 on the other hand comprise flat horizontal top and bottom walls and flat vertical front and rear walls.

In operation, air launching of the model 11 is carried out by first setting the carriage 17 at an assembly position on the track 18 and mounting the model 11 on the carriage by bringing the support plates 25 and 26 from their retracted positions shown in chain-dot line in Fig. 2 to engaged positions as shown in full line, in which the support pins 29,30 and 33,34 engage in the recesses 31,32 and 35,36. The carriage 17, together with the model 11 supported thereby, is then advanced along the track 18 to the start position where the support plates 25 and 26 become held in place by the guide rails 37 and 38. The assembly of the carriage 17 and the model 11 is then accelerated along the track 18 under the action of a compressed air launcher so that it arrives at the deployment location as shown in Figs. 1 to 3 at a velocity sufficient to produce an effective launch of the model 11. During acceleration of the carriage 17 along the track 18 the front pins 29 and 33 apply a forward thrust to the model 11 by engagement with the flat vertical front walls of the recesses 31 and 35. The pins 30 and 34 may if desired serve also to provide forward thrust to the model 11 by engagement with the vertical front walls of the recesses 32 and 36, although in the preferred embodiment as illustrated the pins 30 and 34 serve solely to provide for vertical location of the model 11 on the carriage.

Upon arrival of the carriage 17 at the deployment location the support plates 25 and 26 pass beyond the end of the guide rails 37 and 38 and are then no longer constrained to maintain the vertical disposition shown in Figs. 1 to 3. At this time, the carriage is then abruptly brought to rest, whereupon the model 11 moves forward under its own momentum relative to the carriage 17 arrested on the track 18. As a consequence of this relative movement, the pins 29 and 33 on the support plates 25 and 26 are caused to ride up the curved rear walls of the recesses 31 and 35 and to pivot the support plates 25 and 26 outwardly with a sufficient thrust to cause them to move to retracted positions as shown in chain-dot lines in Fig. 2 in which they are clear of the model 11 which is then freed for launching into the air under its own momentum. Where appropriate a power unit in the model provides for sustained flight. Launching of the model 11 in this way is achieved smoothly and without the hazard that the support plates 25 and 26 may not move sufficiently fast to clear protruding surfaces on the model 11.

It will be seen that the front recesses 31 and 35 of the model 11 are formed with rear walls which are concave. It will however be appreciated that a simple flat inclined rear wall may alternatively be used, provided that the transverse thrust imparted to each support plate by engagement of the front pin with the wall is sufficient to move the support plate well clear of the fuselage 12 of the model 11 and any surfaces protruding from it.

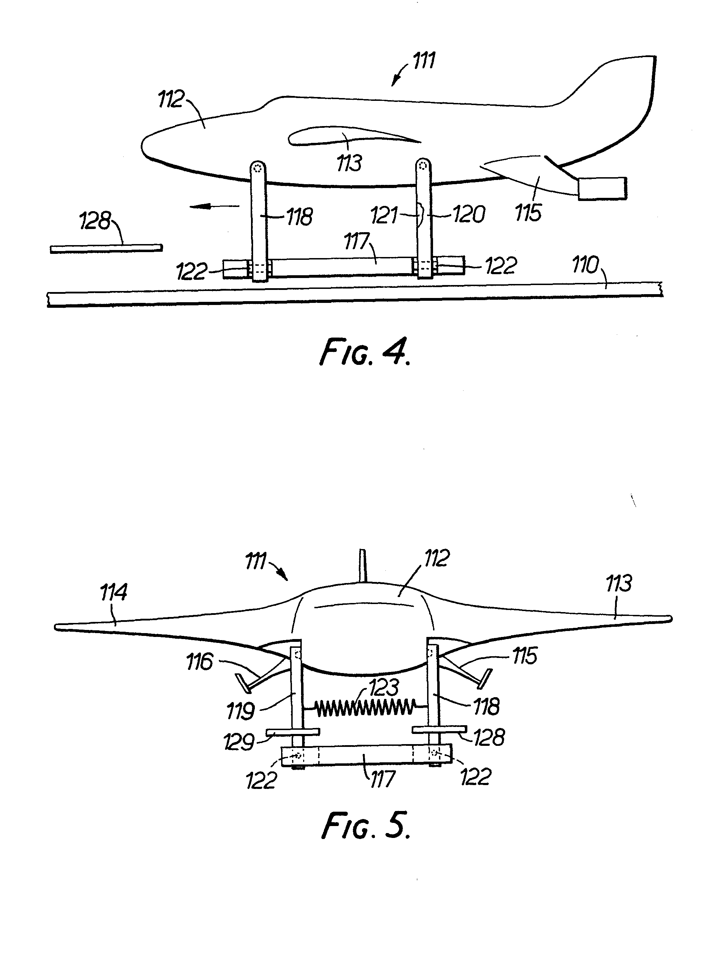

Referring now to Figs. 4 and 5 of the drawings, an aircraft test model 111 having a fuselage 112, port and starboard wings 113 and 114 and tailplane assemblies 115 and 116 is supported on a carriage 117 by upstanding laterally spaced forward support arms 118 and 119 and rearward laterally spaced upstanding support arms 120 and 121. The carriage 117 is mounted by means not shown on a track 110 for horizontal movement in the direction indicated by the arrow.

Each of the arms 118 to 121 is supported at its lower end on a pivot pin 122 extending in the direction of travel of the carriage 117 and is held in the upstanding engaged position shown in Figs. 1 and 2 by a tension spring 123 extending between the arms 118 and 119 and a further tension spring not shown extending between the arms 120 and 121.

Referring now to Fig. 6, the arm 118 is shown in its engaged position in which a boss 124 protruding laterally from a wall 125 of a recess 126 in the fuselage 112 engages in a frusto-conical recess 127 in the end of the arm 118. The other arms 119 to 121 are arranged in like manner to engage protruding bosses formed in recesses in the fuselage 112.

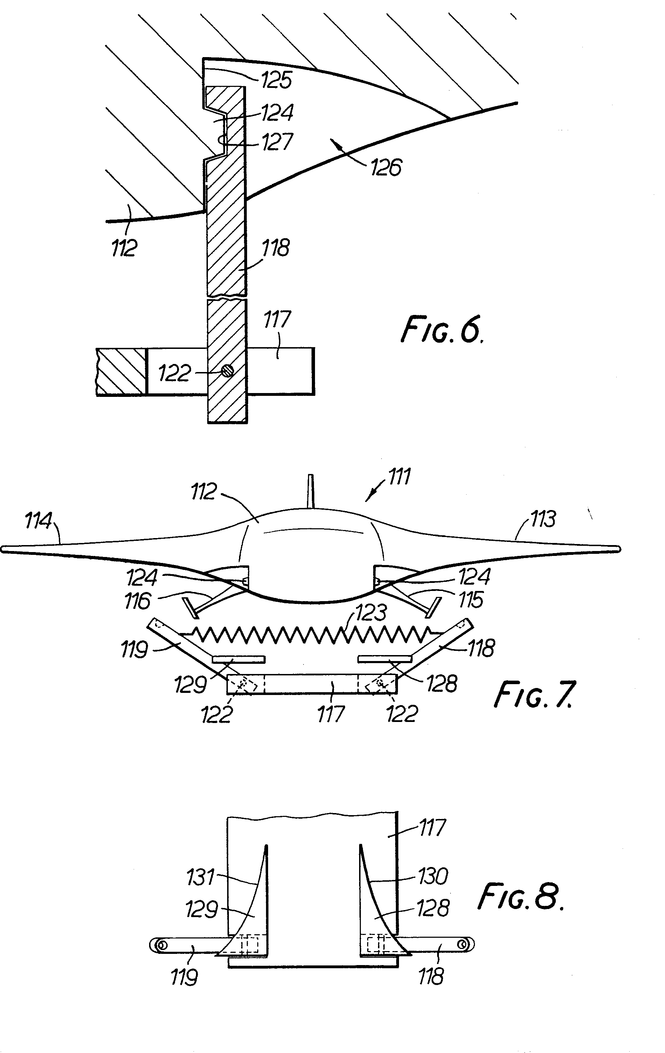

The support arms 118 to 121 are held in the engaged positions by the tension springs during traverse of the carriage 122 from a start location at one end of the track to a deployment location at the other end of the track. At the deployment location of the track there are arranged, as best illustrated in Fig. 8, two stationary deflector plates 128 and 129 formed with edge profiles 130 and 131. As will be seen from the drawings, the two deflector plates 128 and 129 are arranged in a horizontal plane above the level of the pivot pins 122 and are so disposed that their profiles 130 and 131 lie in the paths of the upstanding arms 118 and 120 and 119 and 121 when the carriage moves into the deployment location on the track 110. Upon engagement with the profiles 130 and 131, the arms 18 to 121 are deflected thereby and pivot outwardly on their pivot pins 122, finally reaching retracted positions as illustrated in Figs. 7 and 8. In moving from the engaged position illustrated in Fig. 6 to the retracted position as illustrated in Figs. 7 and 8, the arm 118 moves against the action of its biasing spring 123 in an arc about its pivot pin 122, the upper end of the arm moving out of the recess 126 and clear of the fuselage 112. As the arm 118 and the fuselage 112 are at the instant of deployment travelling at the same speed disengagement of the arm from the frusto-conical boss 124 is not obstructed in any way. Means not shown are provided for holding the arm 118 in the retracted position following its traverse past the plate 128. The other arms 119, 120 and 121 function in the same manner as the arm 118 and the same considerations apply to them.

As best seen in Fig. 8, the arms 118 and 119 in taking up their retracted positions move clear of the model 111 and in particular clear of the depending tailplane assemblies 115 and 116. Similarly the arms 120 and 121 in moving to their retracted positions move clear of the tailplane assemblies 115 and 116.

It is considered desirable although not essential to provide profiles 130 and 131 which are curved so that the support arms 118 to 121 move to their retracted positions at a gradually increasing angular velocities.

In operation, air launching of the model 111 is carried out by first setting the carriage 117 at its start position on the track 110, and mounting the model 111 on the carriage by bringing the support arms into engagement with the support bosses. The carriage 117 is then accelerated along the track 110 preferably under the action of a compressed air launcher so that it arrives at the deployment location at a velocity sufficient to produce an effective launch of the model. At the deployment location the carriage 117 passes beneath the deflector plates 128 and 129, which cause the support arms 118 to 121 to retract from the fuselage 112, thereby freeing the model 111 for launching into the air under its own momentum. The carriage 117 is then brought to rest at a position on the track beyond the deflector plates 128 and 129. Launching of an aircraft test model in this way is achieved smoothly with the support arms moving sufficiently fast to clear protruding surfaces on the model.

The carriage 117 and the track 110 are shown in Fig. 4 only schematically and may take a variety of forms. The carriage 117 may, for example, take the same form as the carriage 17 shown in Figs. 1 to 3 with the support plates 25 and 26 replaced by the support arms 118 to 121 and the track 110 may comprise a pair of rails corresponding to the rails 19 and 20 shown in Figs. 1 to 3 and engaged by the carriage 117 in the same way.

0141672

CLAIMS:

1.      A load deployment device for deploying an aerial load comprising load support means for supporting the load and for deploying the load by causing relative displacement between the support means and the load in a predetermined direction whilst releasing the load from the support means, the support means being movable at deployment of the load from an engaged position in which it engages and supports the load to a retracted position in which it is clear of the load, characterised in that the support means is at deployment of the load movable from the engaged position to the retracted position in a direction transverse to the predetermined direction.

2.      A device according to claim 1 characterised by the provision of a track along which the load support means is guided and drive means for driving the load support means from a start location at one end of the track to a deployment location at the other end of the track, at which the load is deployed.

3.      A device according to claim 2 characterised in that the load support means comprises a carriage constrained to move along the track and load engagement means carried by the carriage and movable at the deployment location on the track in a direction transverse to the direction of movement of the carriage from an engaged position in which it engages and supports the load to a retracted position in which it is clear of the load.

4.      A device according to claim 3, characterised by the provision of holding means for holding the load engagement means in its engaged position during movement of the carriage from the start location to the deployment location and for releasing the load engagement means at the deployment location and by the fact that displacement means are provided so to engage the load engagement means as to move it from the engaged position to the retracted position at the deployment location on the track.

5.      A device according to claim 4, characterised in that the displacement means is provided on the aerial load.

6.      A device according to claim 5, characterised in that means are provided for arresting the carriage at the deployment location on the track, that the displacement means is an inclined surface formed on the aerial load for engagement by the load engagement means and that the load engagement means is moved from its engaged position to its retracted position by riding up the inclined surface when the aerial load advances relative to the arrested carriage at the deployment location.

7.      A device according to claim 6, characterised in that the load engagement means is freely movable on the carriage from the engaged position to the retracted position, whereby it moves to its retracted position clear of the load solely by the thrust imparted to it by the inclined surface of the load.

8. A device according to claim 7, characterised in that load engagement means is mounted on the carriage for pivotal movement about an axis parallel to the direction of movement of the carriage along the track.

9. A device according to claim 8, characterised in that the holding means comprises a guide rail extending along the track from the start location to the deployment location.

10. A device according to claim 9, characterised in that the load engagement means comprises a support plate on each side of the carriage for engagement with each side of the load and a support member carried by the plate for engagement in a recess formed in the load.

11. A device according to claim 10, characterised in that the inclined surface is provided by by the rear wall of the recess at each side of the load.

12. A device according to claim 11, characterised in that the support member is a front pin on the plate and the recess in the side of the load is a front recess in the load and that each plate is provided with a back pin spaced from the front pin and engageable in a rear recess in the side of the load.

13. A device according to claim 12, characterised in that the rear pin of each plate so engages the cooperating rear recess in the load as to provide only for vertical location of the load on the carriage.

14. A device according to claim 3 characterised in that the load engagement means is biased into the engaged position and the device further comprises displacement means at the deployment location on the track so to engage the load engagement means as to move it from the engaged position to the retracted position against the bias applied to it.

15. A device according to claim 14, characterised in that the displacement means comprises one or more deflector members carrying profiles so disposed in and inclined to the path traversed by the load engagement means during movement of the carriage to the deployment location as to engage the load engagement means and cause it to follow the profile and thereby to be moved from the engaged position to the retracted position.

16. A device according to claim 15, characterised in that load engagement means is mounted on the carriage for pivotal movement about an axis parallel to the direction of movement of the carriage along the track.

17. A device according to claim 16, characterised in that the load engagement means comprises a plurality of support arms, that one end of each support arm is pivotally mounted on the carriage for pivotal movement about a pivotal axis parallel to the direction of travel of the carriage on the track and the other end supportingly engages the load and that each arm is pivotal about its pivotal axis from the engaged position to the retracted position under the action of the deflector member or members.

18.     A device according to claim 17, characterised in that each support arm is biased into the engaged position by biasing means and is movable from the engaged position to the retracted position against the biasing action of the biasing means.

19.     A device according to claim 18, characterised in that the load is supported by two forward and two rearward support arms upstanding from the carriage and engaging opposite sides of the load and that the deflector member or members are provided with edge profiles for engagement by the arms.

20.     A device according to claim 19, characterised in that the profiles lie in a plane parallel to the direction of travel of the carriage on the track and are inclined to the direction of travel of the carriage.

21.     A device according to claim 20, characterised in that each of the profiles follows a straight line.

22.     A device according to claim 20, characterised in that each of the profiles follows a curve which is such as to provide for gradually increasing rates of deflection of the arms from the engaged positions to the retracted positions.

23.     A device according to any of claims 19 to 22, characterised in that each support arm is provided with a recess or opening at the end thereof which engages the load, that the load carries a support boss which engages in the recess when the arm is moved to the engaged position and that the load is supported by the arm by engagement of the boss in the recess or opening.

24.    A device according to claim 23, characterised in that the boss is formed in a recessed portion of the load so as not to project from the load and that the arm in moving from the retracted position to the engaged position passes into the recessed portion of the load for engagement with the boss.

25.    A device according to claim 24, characterised in that the boss is of frusto-conical form and the recess or opening in the arm conforms to it.

26.    A device according to any of claims 2 to 25, characterised in that the drive means for driving the carriage comprises a drive element engageable with the carriage and arranged to be driven along the track by fluid under pressure.

FIG. 1.

FIG. 2.

FIG. 3.

FIG. 4.

FIG. 5.

0141672

FIG. 6.

FIG. 7.

FIG. 8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 479 138  (GILBERT ANDRE) * Page 3, lines 7-12; page 9, lines 6-12; figures 1-3 * | 1,3,4 | B 64 F    1/06 |
| A | US-A-3 968 947  (SCHLEGEL et al.) * page 3, lines 10-18; figures 2-4 * | 1 | |
| A | US-A-4 079 901  (MAYHEW et al.) | | |

TECHNICAL FIELDS SEARCHED (Int. Cl.4)

B 64 F
F 41 F

The present search report has been drawn up for all claims

| Place of search | Date of completion of the search | Examiner |
|---|---|---|
| THE HAGUE | 04-02-1985 | MARTINOZZI G.M.E. |